(19) Europäisches Patentamt
European Patent Office
Office européen des brevets

(11) Veröffentlichungsnummer: **0 040 746**
**B1**

(12) # EUROPÄISCHE PATENTSCHRIFT

(45) Veröffentlichungstag der Patentschrift: **27.07.83**

(51) Int. Cl.³: **C 08 L 69/00**

(21) Anmeldenummer: **81103589.8**

(22) Anmeldetag: **11.05.81**

(54) **Flammwidrige, transparente Polycarbonate.**

(30) Priorität: **22.05.80 DE 3019527**

(43) Veröffentlichungstag der Anmeldung: **02.12.81 Patentblatt 81/48**

(45) Bekanntmachung des Hinweises auf die Patenterteilung: **27.07.83 Patentblatt 83/30**

(84) Benannte Vertragsstaaten: **DE FR GB IT**

(56) Entgegenhaltungen: **FR-A-2 329 714**

(73) Patentinhaber: **BAYER AG, Zentralbereich Patente, Marken und Lizenzen, D-5090 Leverkusen 1, Bayerwerk (DE)**

(72) Erfinder: **Druschke, Frank, Dr., 1701 North Street, Endicott, N.Y. 13760 (US)**
Erfinder: **Margotte, Dieter, Dr., Wedelstrasse 48, D-4150 Krefeld 1 (DE)**
Erfinder: **Cohnen, Wolfgang, Dr., Heymannstrasse 36, D-5090 Leverkusen 1 (DE)**
Erfinder: **Idel, Karsten, Dr., Scheiblerstrasse 81, D-4150 Krefeld (DE)**

**EP 0 040 746 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Flammwidrige, transparente Polycarbonate

Gegenstand der vorliegenden Erfindung sind transparente, flammwidrige Polycarbonate auf Basis von Diphenolen, dadurch gekennzeichnet, daß sie enthalten 0,001 bis 0,4 Gew.-%, vorzugsweise 0,01 bis 0,25 Gew.-%, insbesondere 0,05 bis 0,15 Gew.-%, bezogen jeweils auf den Polycarbonatgehalt, eines Stoffes, ausgewählt aus der Verbindungsklasse der Aldehyd- oder Keton-Hydrogensulfid-Addukte der Formeln (I) und (II).

Flammwidrige Polycarbonate werden in der Regel durch den Einbau oder Zusatz von Halogen oder aber durch den Zusatz von Metallsalzen, insbesondere von Alkalisalzen oder Erdalkalisalzen hergestellt. Beiden Methoden sind gewisse Grenzen gesetzt, im einen Fall bezüglich der Verarbeitbarkeit (siehe beispielsweise US-PS 3 334 154), im anderen Fall bezüglich Transparenz (siehe beispielsweise US-PS 3 775 367 oder bezüglich Verfärbungen.

Aufgabe der vorliegenden Erfindung war es, auf wirtschaftliche Weise transparente flammwidrige Polycarbonate bereitzustellen, die die Bedingungen der geforderten Brandklassen erfüllen und die beschriebenen Nachteile nicht zeigen, insbesondere auch bei erhöhten Verarbeitungstemperaturen ein gutes Langzeiteigenschaftsbild behalten.

Es wurde gefunden, daß Polycarbonate ohne Verlust ihrer Transparenz und ohne negativen Einfluß auf die Verarbeitbarkeit oder auf ihr Langzeitverhalten flammwidrig hergestellt werden können, wenn man Aldehyd- oder Keton-Hydrogensulfit-Addukte, in Mengen von 0,001 bis 0,4 Gew.-%, bezogen auf Polycarbonatgewicht, als Flammschutzmittel verwendet. Es können sowohl monomere als auch polymere Hydrogensulfit-Addukte auf Basis entsprechender Mono- bzw. Polyketone oder Mono- bzw. Polyaldehyde eingesetzt werden. Ein besonderer Vorteil besteht darin, daß die Hydrogensulfit-Addukte wirtschaftlich und leicht zugänglich sind.

Unter aromatischen Polycarbonaten im Sinne dieser Erfindung werden Homopolycarbonate und Copolycarbonate verstanden, denen z. B. ein oder mehrere der folgenden Diphenole zugrunde liegen:

Hydrochinon
Resorcin
Dihydroxydiphenyl
Bis-(hydroxyphenyl)-alkane
Bis-(hydroxyphenyl)-cycloalkane
Bis-(hydroxyphenyl)-sulfide
Bis-(hydroxyphenyl)-ether
Bis-(hydroxyphenyl)-ketone
Bis-(hydroxyphenyl)-sulfoxide
Bis-(hydroxyphenyl)-sulfone
α,α'-Bis-(hydroxyphenyl)-diisopropylbenzole

sowie deren kernalkylierte und kernhalogenierte Verbindungen. Diese und weitere geeignete Diphenole sind z. B. in den US-Patentschriften 3 028 365, 3 275 601, 3 148 172, 3 062 781, 2 991 273, 3 271 367, 2 999 835, 2 970 131 und 2 999 846, in den deutschen Offenlegungsschriften 1 570 703, 2 063 050, 2 063 052, 2 211 956, 2 211 957, der franz. Patentschrift 1 561 518 und in der Monographie »H. Schnell, Chemistry and Physics of Polycarbonates, Interscience Publishers, New York, 1964« beschrieben.

Bevorzugte Diphenole sind z. B.:

4,4'-Dihydroxydiphenyl
2,2-Bis-(4-hydroxyphenyl)-propan
2,4-Bis-(4-hydroxyphenyl)-2-methylbutan
1,1-Bis-(4-hydroxyphenyl)-cyclohexan
α,α'-Bis-(4-hydroxyphenyl)-p-diisopropylbenzol
2,2-Bis-(3-methyl-4-hydroxyphenyl)-propan
2,2-Bis-(3-chlor-4-hydroxyphenyl)-propan
Bis-(3,5-dimethyl-4-hydroxyphenyl)-propan
2,2-Bis-(3,5-dimethyl-4-hydroxyphenyl)-propan
Bis-(3,5-dimethyl-4-hydroxyphenyl)-sulfon
2,4-Bis-(3,5-dimethyl-4-hydroxyphenyl)-2-methylbutan
1,1-Bis-(3,5-dimethyl-4-hydroxyphenyl)-cyclohexan
α,α'-Bis-(3,5-dimethyl-4-hydroxyphenyl)-p-diisopropylbenzol
2,2-Bis-(3,5-dichlor-4-hydroxyphenyl)-propan
2,2-Bis-(3,5-dibrom-4-hydroxyphenyl)-propan.

Besonders bevorzugte Diphenole sind z. B.:

2,2-Bis-(4-hydroxyphenyl)-propan
2,2-Bis-(3,5-dimethyl-4-hydroxyphenyl)-propan
2,2-Bis-(3,5-dichlor-4-hydroxyphenyl)-propan
2,2-Bis-(3,5-dibrom-4-hydroxyphenyl)-propan
1,1-Bis-(4-hydroxyphenyl)-cyclohexan.

Die aromatischen Polycarbonate können nach bekannten Verfahren, wie sie in der obengenannten Literatur beschrieben sind, hergestellt werden, so z. B. nach dem Schmelzumesterungsverfahren aus Bisphenol und Diphenylcarbonat oder in homogener Phase (Pyridin-Verfahren) oder in einem zweiphasigen Gemisch aus wäßriger Bisphenolat-Lösung und Methylenchlorid zusammen mit Phosgen (Phasengrenzflächenverfahren).

Die aromatischen Polycarbonate können durch den Einbau geringer Mengen, vorzugsweise von Mengen zwischen 0,05 und 0,2 Mol-% (bezogen auf eingesetzte Diphenole), an drei- oder mehr als dreifunktionellen Verbindungen, insbesondere solchen mit drei oder mehr als drei phenolischen Hydroxygruppen verzweigt sein.

Polycarbonate dieser Art sind z. B. in den deutschen Offenlegungsschriften 1 570 533, 1 595 762, 2 116 974, 2 113 347, der britischen Patentschrift 1 079 821, der US-Patentschrift 3 544 514 und in der deutschen Offenlegungsschrift 2 500 092 beschrieben.

Die aromatischen Polycarbonate sollen in der Regel mittlere Gewichtsmittel-Molekulargewichte $\overline{M}_w$ von 10 000 bis über 200 000, vorzugsweise von 15 000 bis 80 000 haben, ermittelt durch Messungen der rel. Lösungsviskosität in $CH_2Cl_2$ bei 25°C und einer Konzentration von 5 g/l.

Die gemäß der vorliegenden Erfindung als Flammschutzmittel verwendeten Aldehyd- oder Ketonaddukte mit Alkali- oder Erdalkalihydrogensulfiten sind bekannt. Sie werden beispielsweise aus einer gesättigten Alkali- oder Erdalkalimetallhydrogensulfitlösung und einem Aldehyd oder einem Keton hergestellt und fallen als kristalline Addukte aus.

Die Herstellung solcher erfindungsgemäß verwendeter Addukte erfolgt z. B. gemäß US 2 536 751; FR 2 074 674, J. Polym. Sci. A, Vol. 8 (1970), Seite 3196 oder Houben Weyl, Bd. 7/1, Seiten 482 ff.

Geeignete Addukte im Sinne der Erfindung sind Aldehyd- oder Keton-Hydrogensulfit-Addukte der allgemeinen Formeln I und II,

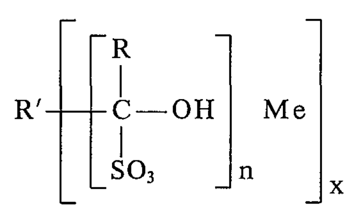

(I)

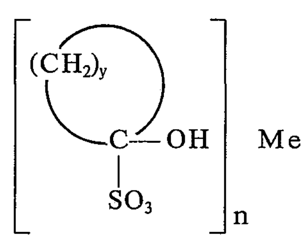

(II)

worin

Me = Alkalimetall und n = 1, oder Me = Erdalkalimetall und n = 2 sind,
x = 1 − 4,
y = 4 − 10,
R = H, Alkyl, Cycloalkyl, Alkenyl, Cycloalkenyl, Aryl oder Aralkyl ist, wobei die C-Reste gegebenenfalls substituiert sein können,
R' = R oder ein polyfunktioneller Rest eines Polyketons oder Polyaldehyds.

Vorzugsweise können

R = H, Methyl und Ethyl

und

R' = R, $C_3$−$C_{18}$-Alkyl und $C_6$−$C_{20}$-Aryl

sein.

Beispielhaft für die Herstellung der erfindungsgemäß eingesetzten Addukte soll die Herstellung des Terephthalaldehyd-Dihydrogensulfit-Adduktes beschrieben werden.

7,86 g (0,075 Mol) $NaHSO_3$ werden in 75 ml Wasser gelöst und die Lösung mit 500 ml Methanol

verdünnt. Dann werden 5 g (0,037 Mol) Terephthalaldehyd zugegeben und 60 Stunden bei Raumtemperatur gerührt. Die ausgefallenen Kristalle werden filtriert und mit Methanol und Ether gewaschen. Nach Vakuumtrocknung bei Raumtemperatur wurden ca. 12,5 g Addukt als weißes kristallines Produkt erhalten.

Folgende Addukte sollen beispielhaft genannt sein.

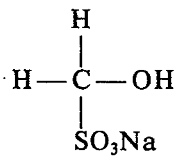

Formaldehyd-Natrium-hydrogensulfit-Addukt

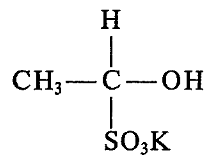

Acetaldehyd-Kaliumhydrogen-sulfit-Addukt

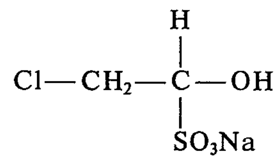

Monochloracetaldehyd-Natrium-hydrogensulfit-Addukt

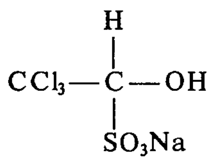

Trichloracetaldehyd-Natrium-hydrogensulfit-Addukt

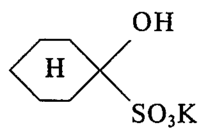

Cyclohexanon-Kaliumhydrogen-sulfit-Addukt

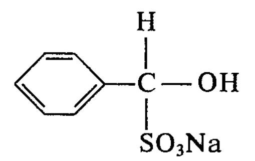

Benzaldehyd-Natriumhydrogen-sulfit-Addukt

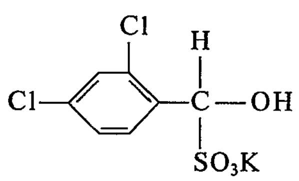

2,4-Dichlorbenzaldehyd-Kalium-hydrogensulfit-Addukt

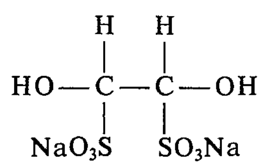

Glyoxal-Dinatriumhydrogen-sulfit-Addukt

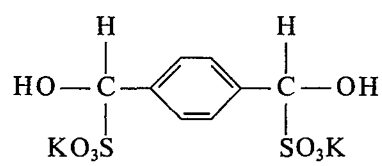

Terephthalaldehyd-Dikalium-hydrogensulfit-Addukt.

Zur Herstellung der erfindungsgemäßen Polycarbonate kann jede beliebige, dem Fachmann bekannte Methode angewandt werden. Beispielsweise kann die Einarbeitung des Zusatzes entweder direkt in die Schmelze des Polycarbonats oder durch Vereinigung mit der Polycarbonat-Lösung oder durch das Mischen von Polycarbonat-Granulat mit dem Zusatz, beispielsweise in Ein- oder Doppelwellenextrudern, erfolgen.

Weitere geeignete Methoden zur Einarbeitung des Zusatzes sind in DE-OS 2 460 052, DE-OS 2 744 018 und in der deutschen Patentanmeldung P 2 933 344.6 beschrieben.

Die erfindungsgemäßen Polycarbonate können nach den üblichen thermoplastischen Verarbeitungsmethoden wie durch Spritzguß oder Extrusion zu Formteilen, Platten und Folien mit verbesserter Flammwidrigkeit verarbeitet werden. Darüber hinaus können Gießfolien daraus hergestellt werden.

Die erfindungsgemäßen flammwidrigen Polycarbonate können außerdem andere Zusatzstoffe wie antistatische Mittel, Pigmente, Formtrennmittel, Thermostabilisatoren, UV-Stabilisatoren und verstärkende Füllstoffe in üblichen Mengen und bekannter Weise zugemischt werden.

Die Verwendung der erfindungsgemäßen Zusammensetzungen kann überall dort erfolgen, wo bislang flammwidrige Polycarbonate mit Erfolg verwendet werden, z. B. im Elektrosektor und im Maschinenbausektor.

Die in den nachfolgenden Beispielen nach den oben beschriebenen Verfahren erhaltenen erfindungsgemäßen flammwidrigen Polycarbonate wurden bei ca. 270°C extrudiert und die Extrudate zu Granulat zerkleinert.

Die Prüfung der Flammwidrigkeit erfolgte nach UL Subj. 94.

Hierbei werden aus dem Granulat der erfindungsgemäßen flammwidrigen Polycarbonate im Spritzgußverfahren bei 300—310°C Teststäbe in zwei Probendicken von 1,6 mm und 3,2 mm hergestellt und nach UL-94 geprüft.

Gemäß diesem Testverfahren wurden die so geprüften Materialien entweder mit UL-94 V-O, UL-94 V-I und UL-94 V-II klassifiziert, und zwar auf Basis der mit je 5 Prüfstäben erhaltenen Ergebnisse. Die Kriterien für jede dieser V-Klassifizierungen gemäß UL-94 sind kurz wie folgt:

UL-94-VO Das durchschnittliche Flammen und/oder Glühen nach Entfernung der Zündflamme soll 5 Sekunden nicht überschreiten und keine der Proben soll Teilchen abtropfen, die absorbierende Baumwolle entzünden.

UL-94-V-I Das durchschnittliche Flammen und/oder Glühen nach Entfernung der Zündflamme soll 25 Sekunden nicht überschreiten und keine der Proben soll Teilchen abtropfen, die absorbierende Baumwolle entzünden.

UL-94-V-II Das erfindungsgemäße Flammen und/oder Glühen nach Entfernung der Zündflamme soll 25 Sekunden nicht überschreiten und die Proben tropfen flammende Teilchen ab, welche absorbierende Baumwolle entzünden.

Weiterhin wurde ein Teststab, der mehr als 25 Sekunden nach Entfernung der Zündflamme brannte, nicht nach UL-94 klassifiziert, sondern derselbe wurde nach den Standardbedingungen der vorliegenden Erfindung als »brennt« bezeichnet. Die Vorschrift UL-94 erfordert weiterhin, daß alle Teststäbe eines Versuchs die jeweilige V-Bewertung erfüllen müssen, anderenfalls erhalten die 5 Teststäbe die Bewertung des schlechteren Einzelstabes.

Die folgenden Beispiele sollen die Erfindung näher erläutern.

Die Ergebnisse sind in der nachfolgenden Tabelle 1 zusammengestellt.

Allgemeine Verfahrensweise

Die Herstellung der gemäß der vorliegenden Erfindung verwendeten Polycarbonate erfolgte durch Umsetzung von Bis-2,2-(4-hydroxyphenyl)-propan (Bisphenol A) und Phosgen in einem Zweiphasengemisch aus wäßriger Natronlauge und Methylenchlorid. Als Katalysator wurde Triethylamin als Kettenregler Phenol eingesetzt. Die Aufarbeitung erfolgte in üblicher Weise durch Eindampfung der vorher gewaschenen Polycarbonatlösung.

Für die Beispiele 1–9 wurde ein Bisphenol A-Polycarbonat mit einer relativen Lösungsviskosität von 1,295 (gemessen in $CH_2Cl_2$ bei 25°C und einer Konzentration von 5 g/l) verwendet.

Nach Zugabe der verschiedenen Addukte wurden die Mischungen in einem Doppelwellenextruder homogenisiert und die erhaltenen Granulate zu Prüfkörpern verarbeitet.

Tabelle 1

| Beispiel Nr. | Flammhemmender Zusatz (Addukt) je 0,08 Gew.-% | UL-94 Bewertung 1,6 mm | UL-94 Bewertung 3,2 mm |
|---|---|---|---|
| 1 | Kontrollversuch | V 2 | brennt |
| 2 | Acetaldehyd-Natriumhydrogensulfit-Addukt | V 2 | VO |
| 3 | Monochloracetaldehyd/Natriumhydrogensulfit-Addukt | V 1 | VO |
| 4 | Methylethylketon/Natriumhydrogensulfif-Addukt | V 2 | V 1 |
| 5 | Cyclohexanon/Kaliumhydrogensulfit-Addukt | V 2 | V 1 |
| 6 | Terephthalaldehyd/Kaliumhydrogensulfit-Addukt | V 2 | V 1 |
| 7 | Benzaldehyd/Natriumhydrogensulfit-Addukt | V 1 | VO |
| 8 | Monochloracetaldehyd/Calciumhydrogensulfit-Addukt | V 1 | VO |
| 9 | 2,4-Dichlorbenzaldehyd/Kaliumhydrogensulfit-Addukt | V 1 | VO |

## Patentansprüche

1. Polycarbonate auf Basis von Diphenolen, dadurch gekennzeichnet, daß sie enthalten 0,001 bis 0,4 Gew.-%, bezogen jeweils auf Polycarbonatgewicht, eines Stoffes, ausgewählt aus der Verbindungsklasse der Aldehyd- oder Keton-Hydrogensulfit-Addukte der Formeln (I) und (II)

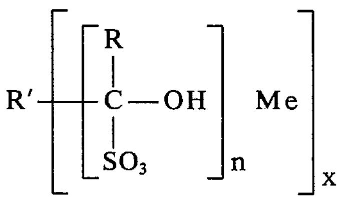

(I)

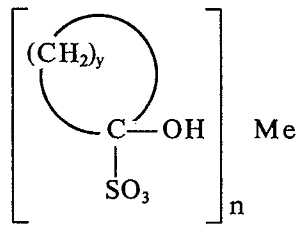

(II)

worin

Me = Alkalimetall und n = 1 oder Me = Erdalkalimetall und n = 2 sind,
X = 1 bis 4,
Y = 4 bis 10,
R = H, Alkyl, Cycloalkyl, Alkenyl, Cycloalkenyl, Aryl oder Aralkyl ist, und worin
R' = R oder ein polyfunktioneller Rest eines Polyketons oder Polyaldehyds ist.

2. Polycarbonate gemäß Anspruch 1, dadurch gekennzeichnet, daß sie 0,01 bis 0,25 Gew.-%, bezogen jeweils auf Polycarbonatgewicht, des Stoffes, ausgewählt aus der Verbindungsklasse der Aldehyd- oder Keton-Hydrogensulfit-Addukte der Formeln (I) und (II) enthalten.

3. Polycarbonate gemäß Anspruch 2, dadurch gekennzeichnet, daß sie 0,05 bis 0,15 Gew.-%, bezogen jeweils auf Polycarbonatgewicht, des Stoffes, ausgewählt aus der Verbindungsklasse der Aldehyd- oder Keton-Hydrogensulfit-Addukte der Formeln (I) und (II) enthalten.

**Claims**

1. Polycarbonates based on diphenols, characterised in that they contain from 0.001 to 0.4% by weight, based on the weight of the polycarbonate, of a substance selected from aldehyde-or ketone-hydrogen sulfite adducts corresponding to formulae (I) and (II) below

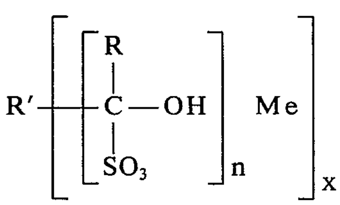

(I)

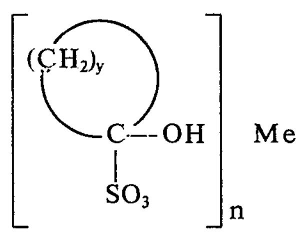

(II)

in which

Me = an alkali metal and n = 1 or
Me = an alkaline-earth metal and n = 2,
X = 1 to 4 and
Y = 4 to 10,
R = H, alkyl, cycloalkyl, alkenyl, cycloalkenyl, aryl or aralkyl and
R' = R or a polyfunctional radical of a polyketone or polyaldehyde.

2. Polycarbonates as claimed in Claim 1, characterised in that they countain from 0.01 to 0.25% by weight, based on the weight of the polycarbonate, of the substance selected from aldehyde- or ketone-hydrogen sulfite adducts corresponding to formulae (I) and (II).

3. Polycarbonates as claimed in Claim 2, characterised in that they contain from 0.05 to 0.15% by weight, based on the weight of the polycarbonate, of the substance selected from aldehyde- or ketone-hydrogen sulfite adducts corresponding to formulae (I) and (II).

**Revendications**

1. Polycarbonates à base de diphénols, caractérisés en ce qu'ils contiennent 0,001 à 0,4% en poids, dans chaque cas par rapport au poids de polycarbonate, d'une substance choisie dans la classe de composés comprenant des produits d'addition hydrogénosulfites d'aldéhydes ou de cétones de formules (I) et (II)

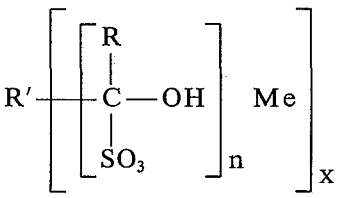

(I)

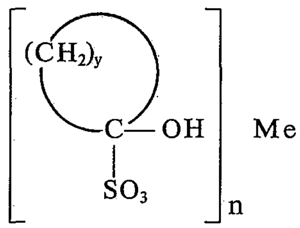

(II)

où

Me = métal alcalin et n = 1, ou Me = métal alcalino-terreux et N = 2,
X = 1 à 4,
Y = 4 à 10,
R = H, alkyle, cycloalkyle, alcényle, cycloalcényle, aryle ou aralkyle, et
R' = R ou un reste polyfonctionnel d'une polycétone ou d'un polyaldéhyde.

2. Polycarbonates suivant la revendication 1, caractérisés en ce qu'ils contiennent 0,01 à 0,25% en poids, dans chaque cas par rapport au poids de polycarbonate, de la substance choisie dans la classe de composés formée des produits d'addition d'hydrogénosulfite d'aldéhydes ou de cétones de formules (I) et (II).

3. Polycarbonates suivant la revendication 2, caractérisés en ce qu'ils contiennent 0,05 à 0,15% en poids, dans chaque cas par rapport au poids de polycarbonate, de la substance choisie dans la classe de composés comprenant les produits d'addition d'hydrogénosulfites d'aldéhydes ou de cétones de formules (I) et (II).